# FASCICULE DE BREVET EUROPEEN

(11) **EP 0 493 164 B1**
(45) Date de publication et mention de la délivrance du brevet: **01.02.1995**
(21) Numéro de dépôt: 91403326.1
(22) Date de dépôt: 09.12.1991
(51) Int. Cl.: H02G 3/04, H02G 3/02

(54) **Dispositif de marquage de goulotte pour le logement de câbles**
Markierungseinrichtung für Kabelrinne
Marking device for cable housing trunking

(30) Priorité: 20.12.1990 FR 9016014
(43) Date de publication de la demande: 01.07.1992
(73) Titulaire: LUDWIG SCHMITT GMBH, D-66131 Saarbrücken (DE)
(72) Inventeur: Steinbach, Horst, W-6601 Saarbrücken-Ensheim (DE)
(74) Mandataire: Lerner, François

(56) Documents cités:
- FR-A- 2 214 222
- US-A- 3 945 706
- US-A- 4 136 257

## Description

L'invention a pour objet un dispositif de marquage de goulotte pour le logement de câbles pour protéger les câbles. Il est usuel de les placer dans des goulottes, par exemple réalisées en des profilés métalliques ou en des profils extrudés et poinçonnés en matière thermoplastique, en forme général de gouttière, lesquelles goulottes sont par exemple suspendues sous des plafonds ou accrochées à des parois par exemple de tunnel ferroviaire, de couloir, dans des sous-plafonds, etc...

De telles goulottes sont décrites, par exemple, dans le document US-A-4136257.

Un problème important est celui du marquage des goulottes permettant une identification immédiate de la destination du câble ou des câbles que la goulotte contient. Sans une telle identification, les problèmes de maintenance deviennent rapidement insolubles dès lors que plusieurs goulottes s'enchevêtrent ou se croisent.

L'invention a pour objet de résoudre ce problème par la prévision d'un dispositif de marquage efficace et d'utilisation très simple.

A cet effet, le dispositif de marquage pour profilés ou goulottes pour le logement de câbles conforme à l'invention, s'appliquant à des goulottes qui présentent sur au moins une de leurs faces latérales des poinçonnages ou fentes qui sont régulièrement réparties, se caractérise selon l'invention en ce qu'il comporte :
- une première pièce comportant au moins deux branches ou pattes susceptibles de s'engager de l'extérieur du profilé en traversant deux fentes peu distantes l'une de l'autre de la goulotte,
- une seconde pièce pouvant s'engager à l'intérieur de la goulotte en venant porter contre une de ses parois latérales, ladite seconde pièce présentant une ouverture dans laquelle sont susceptibles de se verrouiller élastiquement lesdites pattes de ladite première pièce,
- et ladite première pièce comportant en outre une surface apparente de support d'un moyen de marquage.

L'invention et sa mise en oeuvre apparaitront plus clairement à l'aide de la description qui va suivre faite en référence aux dessins annexés montrant à titre d'exemple un mode de réalisation.

Dans ces dessins :

La figure 1 montre en vue perspective un dispositif de marquage conforme à l'invention prêt à être fixé sur une goulotte dont une partie seulement a été illustrée en perspective avec arrachement.

La figure 2 montre en vue de côté selon la flèche II de la figure 1 la goulotte support de câble sur laquelle est fixé un dispositif de marquage.

La figure 3 montre de façon similaire à la figure 2 une variante dans laquelle la goulotte est de moindre hauteur.

La figure 4 montre en vue perspective et à plus petite échelle comment deux dispositifs de marquage fixés sur une même goulotte peuvent recevoir un profil de marquage.

La figure 5 montre vu de côté comment peut être fabriqué en une seule pièce par moulage le dispositif complet de l'invention.

La figure 6 montre le dispositif de la figure 5 vu dans la direction de la flèche VI de cette figure.

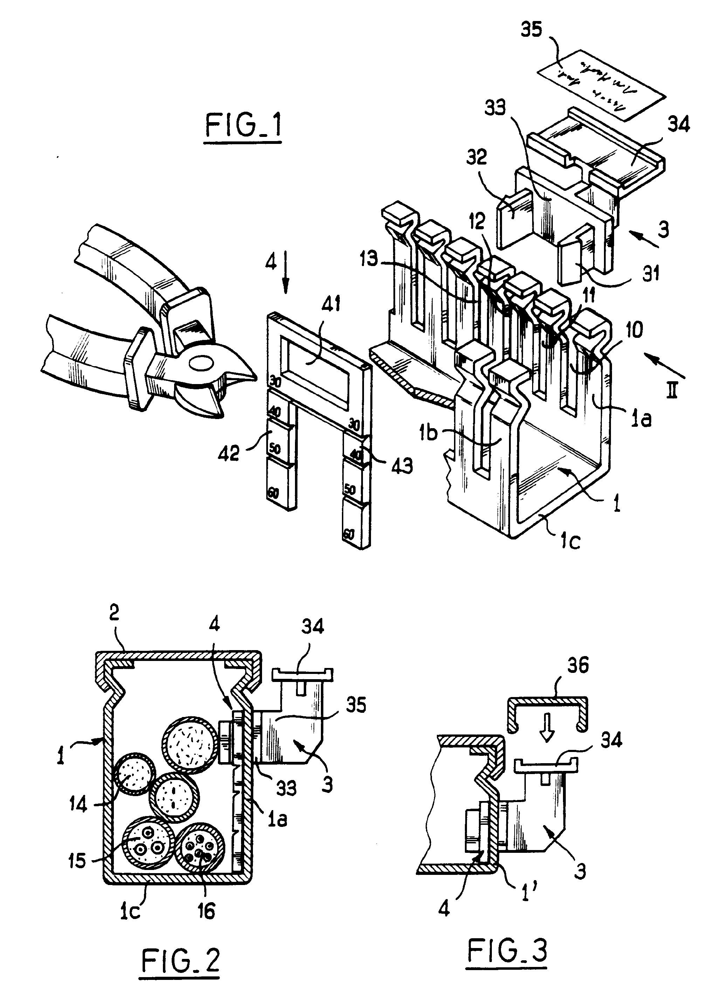

En se reportant aux dessins et en faisant tout d'abord référence à la figure 1, on aperçoit une goulotte 1 ayant de façon générale la forme d'un profilé en gouttière en U, avec sur chaque face latérale 1a, 1b du profilé des fentes dont quatre ont été repérées 10, 11, 12, 13 sur la face latérale 1a.

Un tel profilé est tout ce qu'il y a de plus classique. Il est destiné à recevoir des câbles, comme schématisés à la figure 2, notamment des câbles électriques et tels que repérés 14, 15, 16. La goulotte 1 est d'autre part normalement fermée par un couvercle 2 qui vient se verrouiller sur sa partie supérieure.

Conformément à l'invention, il est possible d'identifier une goulotte telle que 1 par rapport aux autres en lui associant un dispositif de marquage composé essentiellement de deux pièces, à savoir une première pièce repérée dans son ensemble 3 qui portera les moyens de marquage, et une seconde pièce repérée dans son ensemble 4 et qui permettra de fixer la pièce 3 en coopération avec la pièce 4 contre la paroi extérieure de la face latérale 1a de la goulotte 1.

La fixation se fait simplement par engagement des pattes 31, 32 de la pièce 3 dans deux fentes peu distantes telles par exemple que les fentes 11 et 13 de la paroi 1a de la goulotte. Et les pattes 31, 32 viennent se verrouiller dans l'orifice 41 de la seconde pièce 4 placée à l'intérieur de la goulotte également contre la paroi 1a, mais sur sa face interne.

Comme il apparait clairement à la figure 2, dans la position d'assemblage des pièces 3 et 4 en coopération avec la paroi 1a de la goulotte 1, les pattes 30, 31, 32 viennent se verrouiller à l'intérieur de l'ouverture 41 dans le cadre de cette ouverture, et la pièce 4 est maintenue fermement en position contre la paroi 1a de la goulotte, étant verrouillée en translation par l'engagement des pattes 31, 32 dans les fentes 11 et 13 de la goulotte, et en hauteur du fait que les deux pieds 42, 43 qui prolongent vers le bas le cadre 41 viennent s'appuyer à leur base jusque sur le fond 1c de la goulotte (voir figure 2).

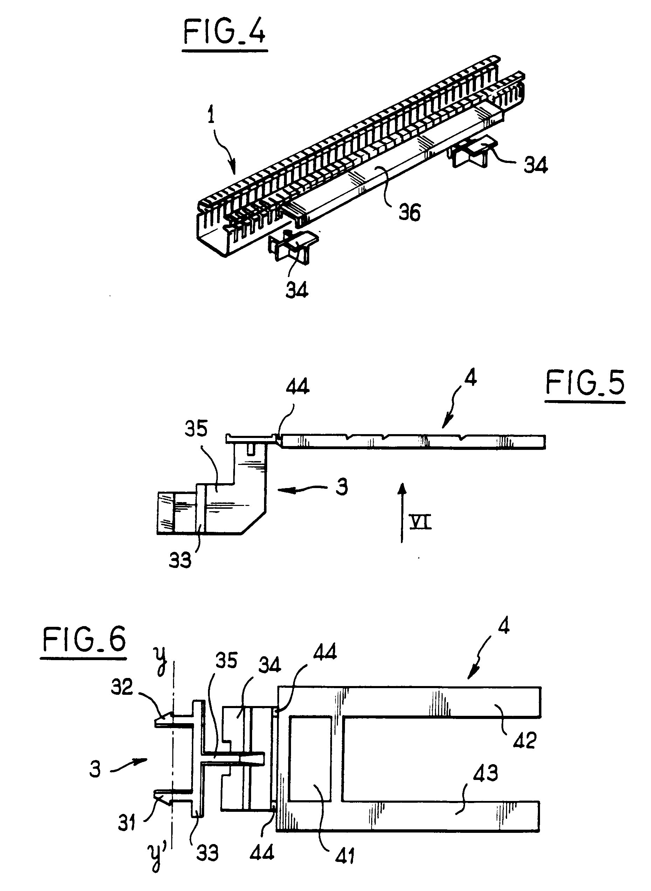

Dans le mode de réalisation illustré, la pièce 3 qui a une forme générale de plaquette plate rectangulaire 33 présentant d'un côté les deux pattes en saillies 31, 32 comporte de l'autre côté une plaque 34, support d'un moyen d'étiquetage qui à la figure 1 a été représenté comme formé par exemple par une étiquette adhésive 35. La plaque 34 est orientée sensiblement orthogonalement à la plaque 33 à laquelle elle est réunie par une partie de jonction 35, mieux visible aux figures 5 et 6, et qui est elle-même orthogonale aux plaques 33 et 34 ; on notera également que la plaque 34 est orientée parallèlement à la direction d'écartement des deux pattes, direction repérée y′, y à la figure 6.

En se référant à la figure 3, on aperçoit que dans le cas d'une goulotte 1′ de hauteur réduite, la fixation du dispositif se fait de la même façon, à ceci près que l'on a pris soin préalablement de découper la partie 4 juste sous le cadre de l'ouverture 41 en supprimant donc les pieds 42, 43, la hauteur du cadre 41 étant adaptée à la hauteur de la goulotte normalisée supposée ici de hauteur minimale.

Généralement, les goulottes pourront par exemple avoir des profondeurs de 30, 40, 50 ou 60 mm. Pour des hauteurs de 30 mm, on découpera les pieds 42, 43 au ras du cadre. Pour les hauteurs de 40 mm on découpera les pieds au niveau des traits marqués 40 (figure 1) et ainsi de suite au niveau 50 pour les goulottes de profondeur 50, ou l'on ne découpera pas les pieds pour les goulottes de hauteur 60, comme supposé à la figure 2.

Comme il apparait aux figures 3 et 4, il est possible également selon l'invention de fixer sur deux plaques support 34 voisines un profil 36 de plus grande surface sur lequel on pourra indiquer en clair le marquage souhaité, par exemple la destination des différents câbles contenus dans la goulotte concernée.

Comme illustré aux figures 5 et 6, avantageusement les deux pièces 3 et 4 viendront de moulage en une seule pièce en étant réunies entre elles par une partie de jonction sécable, par exemple par deux points, tels que repérés 44.

## Revendications

1. Dispositif de marquage pour profilés ou goulottes (1) pour le logement de câbles (14,15,16), lesdites goulottes présentant sur au moins l'une de leurs faces latérales (1a,1b) des poinçonnages ou fentes (10,11,12,13) régulièrement réparties, ledit dispositif étant caractérisé en ce qu'il comporte :
- une première pièce (3) comportant au moins deux branches ou pattes (31, 32) susceptibles de s'engager de l'extérieur de la goulotte en traversant deux fentes (11,13) peu distantes l'une de l'autre de la goulotte (1),
- une seconde pièce (4) pouvant s'engager à l'intérieur de la goulotte en venant porter contre une de ses parois latérales (1a), ladite seconde pièce présentant une ouverture (41) dans laquelle sont susceptibles de se verrouiller élastiquement lesdites pattes (31,32) de ladite première pièce,
- et ladite première pièce comportant en outre une surface apparente (34) de support d'un moyen de marquage.

2. Dispositif selon la revendication 1 caractérisé en ce que ladite seconde pièce (4) prend appui en position d'engagement fonctionnel sur la paroi de fond (1c) de la goulotte.

3. Dispositif selon la revendication 1 ou la revendication 2 caractérisé en ce que ladite première pièce (3) a une forme générale de plaquette plate rectangulaire (33) formée avec d'un côté les deux pattes en saillie (31, 32) précitées et l'autre côté une plaque (34) support d'un moyen d'étiquetage.

4. Dispositif selon la revendication 3 caractérisé en ce que la plaque (34) support du moyen d'étiquetage est orientée sensiblement orthogonalement à ladite plaquette (33) et parallèlement à la direction (y′, y) d'écartement des deux pattes (31,32).

5. Dispositif selon l'une des revendications précédentes caractérisé en ce que ladite seconde pièce comporte en dessous de son ouverture précitée au moins un pied (42,43) dont la longueur correspond à la hauteur interne de la goulotte.

6. Dispositif selon la revendication 5 caractérisé en ce que lesdits pieds (42, 43) peuvent être découpés à des hauteurs déterminées correspondant aux diverses profondeurs normalisées des goulottes à équiper.

7. Dispositif selon l'une des revendications 3 à 6 caractérisé en ce qu'un profil (36) est prévu pour venir se fixer sur au moins deux plaques support (34) d'un moyen d'étiquettage de deux dites premières pièces fixées en positions successives sur une même goulotte.

## Patentansprüche

1. Markierungsvorrichtung für Profile oder Rinnen (1) für die Unterbringung von Kabeln (14, 15, 16), wobei die Rinnen auf mindestens einer ihrer Seitenflächen (1a, 1b) Lochungen oder Schlitze (10, 11, 12, 13) aufweisen, die regelmäßig verteilt sind, wobei die Vorrichtung **dadurch gekennzeichnet ist, daß** sie aufweist:
- ein erstes Teil (3) mit mindestens zwei Bügeln oder Klauen (31, 32), welche geeignet sind, von außerhalb der Rinne in Eingriff zu kommen, indem sie zwei wenig entfernt voneinander befindliche Schlitze (11, 13) der Rinne (1) durchqueren,
- ein zweites Teil (4), das im Inneren der Rinne in Eingriff kommen kann, indem es gegen eine der Seitenwände (1a) zum Tragen kommt, wobei das zweite Teil eine Öffnung (41) aufweist, in welcher sich elastisch zu verriegeln die Klauen (31, 32) des ersten Teiles geeignet sind,
- und wobei das erste Teil ferner eine Stützsichtoberfläche (34) für ein Markierungsmittel aufweist.

2. Vorrichtung nach Anspruch 1, **dadurch gekennzeichnet, daß** sich das zweite Teil (4) in der Position des betrieblichen Eingriffes auf der Bodenwand (1c) der Rinne abstützt.

3. Vorrichtung nach Anpruch 1 oder nach Anspruch 2, **dadurch gekennzeichnet, daß** das erste Teil (3) eine allgemeine Form eines flachen, rechtwinkeligen Plättchens (33) hat, welches auf einer Seite mit den zwei vorgenannten vorspringenden Klauen (31, 32) gebildet ist und auf der anderen Seite eine Stützplatte (34) für ein Etikettierungsmittel hat.

4. Vorrichtung nach Anpruch 3, **dadurch gekennzeichnet, daß** die Stützplatte (34) für das Etikettierungsmittel im wesentlichen orthogonal zu den Plättchen (33) und parallel zu der Richtung (y′, y) des Abstandes der zwei Klauen (31, 32) ausgerichtet ist.

5. Vorrichtung nach einem der vorhergehenden Ansprüche, **dadurch gekennzeichnet, daß** das zweite Teil unterhalb seiner vorgenannten Öffnung mindestens einen Fuß (42, 43) aufweist, dessen Länge der inneren Höhe der Rinne entspricht.

6. Vorrichtung nach Anspruch 5, **dadurch gekennzeichnet, daß** die Füße (42, 43) auf vorbestimmten Höhen abgeschnitten sein können, welche den verschiedenen genormten Tiefen der zu montierenden Rinne entsprechen.

7. Vorrichtung nach einem der Ansprüche 3 bis 6, **dadurch gekennzeichnet, daß** ein Profil (36) vorgesehen ist, damit es auf mindestens zwei Stützplatten (34) für ein Etikettierungsmittel der zwei ersten Teile befestigt wird, welche in aufeinanderfolgenden Positionen auf einer selben Rinne befestigt sind.

## Claims

1. Marking device for channels or trunking (1) for housing cables (14,15,16), the said trunking having regularly spaced punched holes or slots (10,11,12,13) on at least one of its lateral faces (1a,1b), the said device being characterised in that it comprises:
a first component (3) comprising at least two branches or arms (31,32) capable of engaging the trunking from the outside through two closely spaced slots (11,13) in the trunking (1),
a second component (4) engageable with the interior of the trunking against one of its lateral walls (1a), the said second component having an opening (41) in which the said arms (31,32) of the said first component can be resiliently fixed,
and the said first component further including a visible support surface (34) for label means.

2. A device according to claim 1 characterised in that the said second component (4) rests in a functional engagement position on the back wall (1c) of the trunking.

3. A device according to claim 1 or claim 2 characterised in that the said first component (3) has the general shape of a flat rectangular plate (33) formed, on one side, with the above-mentioned two projecting arms (31,32) and, on the other side, with a support plate (34) for label means.

4. A device according to claim 3 characterised in that the support plate (34) for the label means is oriented approximately orthogonally of the said plate (33) and parallel to the direction (y′,y) of separation of the two arms (31,32).

5. A device according to any one of the preceding claims, characterised in that the said second component has at least one leg (42,43) below its above-mentioned opening the length of which leg corresponds to the internal height of the trunking.

6. A device according to claim 5, characterised in that the said leg (42,43) can be cut at specific heights corresponding to the various standardised depths of the trunking to be fitted.

7. A device according to any one of claims 3 to 6, characterised in that a profile (36) is provided to be attached on at least two support plates (34) of label means of two said first components fixed in successive positions on the same trunking.
